# EUROPEAN PATENT APPLICATION

(11) **EP 2 234 029 A1**
(43) Date of publication of application: **29.09.2010**
(21) Application number: 09290221.2
(22) Date of filing: 26.03.2009
(51) Int. Cl.: G06F 21/00, G06Q 30/00

(54) **Age verification method and related devices and systems**

(71) Applicant: FRANCE TELECOM, 75015 Paris (FR)
(72) Inventor: Tran, Neil, London NW1 8AW (GB)
(74) Representative: Cabinet Plasseraud

(57) **Abstract**

Method for allowing a content provider system (9-11) to verify the age of a user (1) holding a terminal (2) prior to providing content to the user terminal through a communication network (3), the user having registered with an operator of the communication network, the registration comprising the storage in a database (6) of the operator of information from which the user age can be derived. Prior to providing content to the user terminal, the content provider system : obtains user identity related information with respect to the user ; requests retrieval of the information from which the user age can be derived, stored in the database of the operator with respect to said user, the request including the obtained user identity related information ; and obtains the age of the user as a result of said retrieval of the information from which the user age can be derived.

## Description

The present invention relates to age verification.

More particularly, it relates to the verification of the age of a user by a content provider system prior to providing content to a terminal of the user through a communication network.

There are many situations where a content provider would like to know the age of a user before providing said user with content.

As non limiting examples of such situations, one can think of :
- Children protection: the provider of e.g. adult content, gambling services, social network services, advertisements for products or services subject to charges, video-on-demand, etc. may wish to certify that a given user is not a child prior to sending him/her content ;
- Online shops : online shops selling e.g. alcohols or drugs may need to verify age before allowing users to proceed to checkout ;
- Solvency check : the provider of content subject to charges may wish to check whether the user is above the age required to have a bank account prior to sending him/her the content;
- Content customization : the provider of content may wish to know the age of a given user so as to adapt the content accordingly. For instance, a bank may use the user age to determine the attitudes of different customers, such as teenager might be interested in opening saving account, young adult around 30 might be concerned about buying a house, and elderly in 60 of age might consider retirement.

Of course, many other examples may be envisaged.

Conventionally, age verification is done in the following manner : a user transmits, by means of his/her terminal, information to the content provider through a communication network. This information sent online is then checked by the content provider for him to make a decision as to whether and/or what content should be returned to the user terminal through the communication network.

The information sent by the user is typically a credit card number. Because only people above a certain age can get a credit card, the entering of such credit card number is considered to be an indication that the user is above that age.

However, it is very easy for users to fake by using someone else's credit card number. Moreover, this mode of operation is quite imprecise as it only gives binary information (above or below the age required) and the age threshold cannot be changed.

Other information sometimes required to be sent by the user is a password that the user has purchased beforehand by using a credit card. This is again considered as a proof of adulthood.

But this approach has about the same disadvantages as the ones mentioned above. In addition, it imposes cost to the user who has to purchase a password, so that it might be rejected by some people not willing to pay money for that.

More sophisticated approaches may exist to improve the age verification, but they would require building a specific infrastructure for that purpose, most of the content providers would not be ready to invest in.

Another age verification method and system are thus needed.

The invention proposes a method for allowing a content provider system to verify the age of a user holding a terminal prior to providing content to the user terminal through a communication network, the user having registered with an operator of the communication network in order to communicate over said communication network, the registration of said user comprising the storage in a database of the operator of information from which the user age can be derived. The method comprises the following steps carried out by the content provider system, prior to providing content to the user terminal :
- obtaining user identity related information with respect to the user;
- requesting retrieval of the information from which the user age can be derived, stored in the database of the operator with respect to said user, the request including the obtained user identity related information ; and
- obtaining the age of the user as a result of said retrieval of the information from which the user age can be derived.

In this way, the invention takes benefit from the user age related information which has been obtained by the operator of the communication network beforehand within the framework of the user's registration, to improve reliability of the age verification.

Moreover, because the user age related information is already available with the operator, there is no need for the content provider to build a specific architecture to get it.

Likewise, there is no additional cost for the user, after he/she has been registered with the operator.

According to advantageous optional features of the invention, which may be combined in any appropriate way :
- the database of the operator may be associated with a billing server of the operator ;
- the registration of the user with the operator may comprise a face-to-face authentication of the user by a retail outlet acting for said operator;
- a user security token may be obtained by the content provider system in addition to said user identity related information, and the request for retrieval of the information from which the user age can be derived may further include the obtained user security token ;
- retrieval of the information from which the user age can be derived may be performed selectively on request from the content provider system, depending on the value of the user security token included in said request;
- retrieval of the information from which the user age can be derived may be performed selectively, depending on whether the content provider system is authorized by the operator to request said retrieval ;
- the communication network may include a server of the operator, said server being arranged for handling the request from the content provider system for retrieval of the information from which the user age can be derived ;
- the method may further comprise the content provider system selectively providing content to the user terminal through the communication network, depending on the age of the user obtained.

The invention also proposes a content provider system arranged for verifying the age of a user holding a terminal prior to providing content to the user terminal through a communication network, the user having registered with an operator of the communication network in order to communicate over said communication network, the registration of said user comprising the storage in a database of the operator of information from which the user age can be derived. The content provider system comprises :
- a first reception unit for receiving user identity related information with respect to the user ;
- a transmission unit for transmitting a request for retrieval of the information from which the user age can be derived, stored in the database of the operator with respect to said user, the request including the user identity related information received by the reception unit; and
- an age obtaining unit for obtaining the age of the user as a result of said retrieval of the information from which the user age can be derived.

The invention also proposes a server in a communication network for participating in the verification by a content provider system of the age of a user holding a terminal prior to providing content to the user terminal through the communication network, the user having registered with an operator of the communication network in order to communicate over said communication network, the registration of said user comprising the storage in a database of the operator of information from which the user age can be derived. The server comprises :
- a reception unit for receiving from the content provider system a request for retrieval of the information from which the user age can be derived, stored in the database of the operator with respect to said user, the request including user identity related information ;
- a retrieving unit, responsive to said request being received by the reception unit, for retrieving the information from which the user age can be derived, stored in the database of the operator with respect to said user; and
- a transmission unit for transmitting to the content provider system the information retrieved by the retrieving unit or the age of the user derived from said information.

The invention also proposes a system comprising a content provider system and a communication network, the system being arranged for allowing the content provider system to verify the age of a user holding a terminal prior to providing content to the user terminal through the communication network, according to the above-mentioned method.

The invention also proposes a computer program product comprising code instructions for, when loaded and run on a content provider system, verifying the age of a user holding a terminal prior to providing content to the user terminal through a communication network, the user having registered with an operator of the communication network in order to communicate over said communication network, the registration of said user comprising the storage in a database of the operator of information from which the user age can be derived. The code instructions are arranged for:
- receiving user identity related information with respect to the user ;
- transmitting a request for retrieval of the information from which the user age can be derived, stored in the database of the operator with respect to said user, the request including the user identity related information received by the reception unit ; and
- obtaining the age of the user as a result of said retrieval of the information from which the user age can be derived.

The preferred features of the above aspects which are indicated by the dependent claims may be combined as appropriate, and may be combined with any of the above aspects of the invention, as would be apparent to a person skilled in the art.
- FIG.1 shows an exemplary system for implementing the invention according to one embodiment; and
- FIG.2 is a diagram showing exemplary steps and message transmissions according to one embodiment of the invention.

The invention allows a content provider system to verify the age of a user holding a terminal prior to providing content to the user terminal through a communication network.

Before starting the age verification process, this user has already registered with an operator of the communication network in order to communicate over said communication network.

As a non-limiting example, the user may hold a mobile terminal and have a registration, e.g. a subscription, with a mobile operator of a mobile communication network. Such registration is very common, particularly with respect to radio cellular networks such as GSM (Global System for Mobile communications) and UMTS (Universal Mobile Telecommunication System), and can be seen as a pre-requisite for the user to communicate over the mobile communication network.

Of course, similar registration could take place with the operator of another type of communication network, such as the operator of a fixed PSTN (Public Switched Telephone Network) or an Internet access provider, for instance when the user holds a non-mobile terminal.

During the registration process, the user is authenticated by any appropriate means. Moreover, user related information is requested during registration. The user related information includes information from which the user age can be derived, such as the user age itself at the date of registration, the user birth date, a user social insurance number, or other.

The user related information may also include user identity related information, such as a name of the user, or any other user identity that enables to clearly and unambiguously identify the user.

The user related information may also include a security token associated with the user to be registered. Security token means any secret information that only the user and the operator know. It may take any form, such as a password. It may be chosen by the user or assigned by the operator.

Other user related information can also be requested during registration, instead of or in addition to the ones mentioned above.

The registration of the user can be performed in any conventional way. According to an advantageous manner, it comprises a face-to-face authentication of the user by a retail outlet acting for the operator of the communication network. Such offline authentication is particularly reliable, because a person from the operator retail outlet can check more easily that the user is the one he/she claims to be, for example by comparing his/her face to a photograph put on his/her identity card. It also allows to visually check that the user looks the age he/she claims to be. Alternatively however, the registration may be done in a fully electronic way.

During registration, the user related information, especially the information from which the user age can be derived, is stored in a database of the operator. The information stored in the database is normally used by the operator in relation to the use of its communication network. In particular, the operator can use the age related information as a complement to the user identity, to even more clearly and ambiguously identify him/her.

As it will appear from the following, the invention takes benefit from the information stored in the operator's database, to offer age verification to content providers.

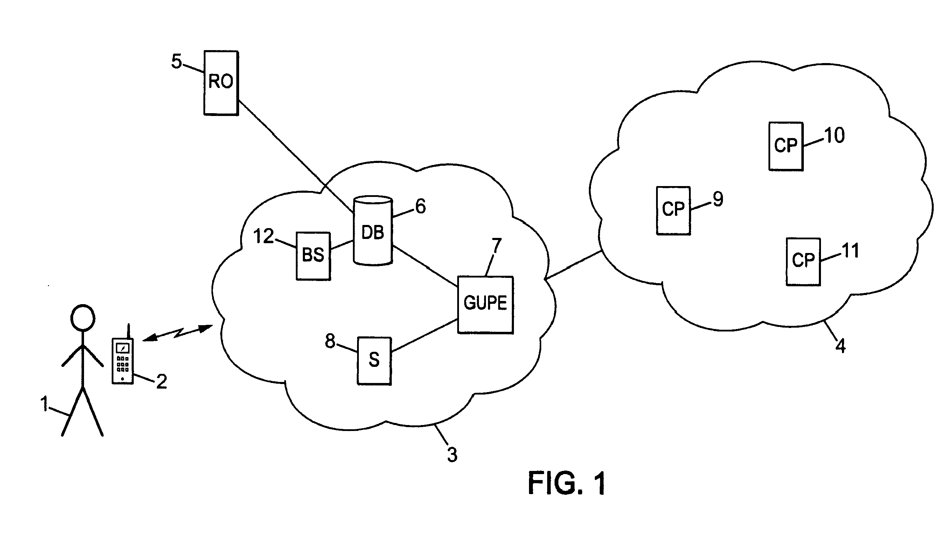

FIG.1 shows an exemplary system in which the invention can take place. This system comprises a communication network 3 managed by an operator. As mentioned above, the communication network 3 may be any kind of network, e.g. a mobile network, a fixed network, or other. Depending on its nature, the communication network 3 can help registered users communicate with appropriate terminals, such as mobile phones, fixed telephones, communicating personal digital assistants, smart phones, computers, or any other suitable communication device.

As an example, the user 1 has been registered with an operator of the communication network 3 and can thus communicate with the communication network 3 by means of his/her terminal 2.

In the example shown in FIG.1, the communication network 3 includes a database DB 6, storing the user related information obtained during registration. In particular, the database DB 6 includes information from which the age of the user 1 can be derived. In association with such information, identity related information and/or a security token may also be advantageously stored in the database DB 6 with respect to the user 1.

As mentioned above, all or part of that information may be inputted into the database DB 6 during registration from an operator retail outlet RO 5 having an appropriate device (e.g. a server) or system connected therewith. Alternatively, the database DB 6 may be fed directly by the operator itself, without going through an operator retail outlet.

The database DB 6 may be associated with a billing server BS 12 of the operator of the communication network 3.

In addition, the communication network 3 may include specific servers 7 and 8 whose functions will be detailed later.

At the other end, one or several content providers may hold systems for providing content to users.

In FIG.1, three content provider systems CP 9-10 are shown. They may belong to the same or to different content providers. They may also each consist in a single device, e.g. a Web site, or in a complex system including several devices.

The content provider systems CP 9-11 are arranged for providing content to users. The content can be of any kind, e.g. data (text and/or images and/or audio and/or video), voice, or other. It can be delivered alone or within the framework of one or several services (e.g. video-on-demand, games, gambling, social network services, advertisements, online shops, etc.). The way the content is delivered can also be of any kind (downloading, streaming, Web browsing, push, etc.).

In the illustrated example, the content provider systems CP 9-11 are shown as being part of a system 4 distinct from but connected to the communication network 3. The system 4 may be a network capable of transporting content, such as the Internet network. The content is thus transmitted to the communication network 3 before being transported to users registered with the operator of the communication network 3, like the user 1 for example.

Alternatively, the content provider systems may be part of the communication network 3. In that case, they may even be used by the operator itself to provide content to users.

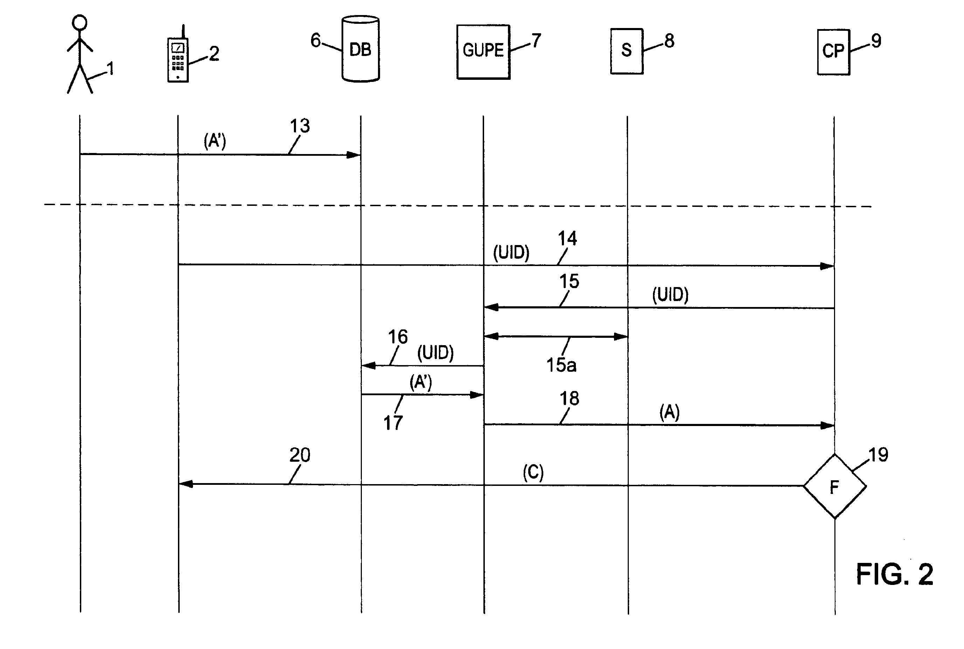

FIG.2 shows an exemplary diagram for carrying out age verification according to an embodiment of the invention, in a system of the type shown in FIG.1.

As mentioned above, the user 1 is first registered with an operator of the communication network 3 beforehand. Within the framework of this registration, information A' from which the age of the user 1 can be derived is stored in the database DB 6 of the operator, possibly together with other information relating to the user 1, such as user identity related information and/or a security token (step 13).

Later on, but prior to providing content from the content provider system CP 9 to the terminal 2 of the user 1, the following steps are carried out. Those steps may be triggered for example when providing content to the terminal 2 of the user 1 is considered, e.g. upon request of the user 1 or on the content provider system's initiative.

Information relating to the identity of the user 1 (UID) is first obtained at the content provider system CP 9. That information may be a name of the user, or any other user identity that enables to clearly and unambiguously identify the user. Advantageously, it is of the same type as the user identity related information that may be stored in the database DB 6 as mentioned above.

As shown in step 14 of FIG.2, the user identity related information UID can be sent to the content provider system CP 9 from the terminal 2 of the user 1. In this case, the content provider system CP 9 may comprise a reception unit for receiving the user identity related information UID. The transmission of the user identity related information UID may be secured, e.g. by use of ciphering, in order to protect the UID information.

Alternatively, the content provider system CP 9 may obtain the user identity related information UID in any other suitable way. For instance, the user identity related information UID may be provided to the content provider system CP 9 by the operator of the communication network 3. As an example, it may be retrieved within the communication network 3, e.g. after a simple message (not including UID) has been sent from the terminal 2 of the user 1 to the content provider system CP 9 or vice-versa. This may be done by retrieving a correspondence in the database DB 6 between information associated with the message sent (e.g. a phone number, a subscriber identity number, etc.) and the UID stored for the user 1.

Also, if the user identity related information UID is sent by the user 1, it may be checked in the communication network 3, for instance by comparing it with user identity related information retrieved in the communication network 3 as mentioned in the paragraph above.

Optionally, other user related information may be obtained by the content provider system CP 9, in order to improve the certification of the user 1. For instance, a security token advantageously of the same type as the one possibly stored in the database DB 6 for that user may be sent to the content provider system CP 9 by the user 1. All the user related information may be transmitted to the content provider system CP 9 in a single message or in a plurality of messages.

Once the user identity related information UID with respect to the user 1 has been obtained by the content provider system CP 9, the latter can put it into a request for retrieving the information from which the user age can be derived, which is stored in the database DB 6 of the operator with respect to the user 1.

This request 15 is addressed to the communication network 3. For instance, it is transmitted to the communication network 3, by a transmission unit of the content provider system CP 9. In the example illustrated, it is sent to the server 7 of the operator, called GUPE (for Generic User Profile Enabler) in FIG.2, which has a reception unit capable of receiving it. This server GUPE 7 is included in the communication network 3 as shown in FIG.1, and is arranged for handling the request 15 from the content provider system CP 9. This means that the server GUPE 7 is capable of forwarding the request 15 to the database DB 6 and of returning the response to this request to the content provider system CP 9.

Alternatively, the request 15 for retrieving the information from which the user age can be derived may be addressed to another intermediate device capable of interacting with the database DB 6, or to the database DB 6 directly.

In the present example, a retrieving unit of the server GUPE 7 is in charge of retrieving the information A' from which the user age can be derived, stored in the database DB 6 with respect to the user 1. To this end, it may forward the request 15 to the database DB 6 (step 16). The database DB 6 can then retrieve the information A' from which the user age can be derived, from the user identity related information UID included in the request 15.

For example, if the information A' was stored in association with information relating to the identity of the user 1, the database DB 6 may check the UID included in the forwarded request 16 and find that it matches the information relating to the identity of the user 1. It can then retrieve the associated information A' and return it as a response 17 to the server GUPE 7, a transmission unit of which then forwards it to the content provider system CP 9 (step 18), or directly to the content provider system CP 9.

Advantageously, retrieval of the information A' from which the user age can be derived may be performed selectively, depending on whether the content provider system CP 9 is authorized by the operator to request such retrieval. To this end, a device such as a server S 8 may be used to store a list of authorized content provider systems and check whether a given content provider system is part of that list. This is shown in step 15a of FIG.2, in which the server GUPE 7 interrogates the server S 8 about the content provider system CP 9 (e.g. by means of an identifier of CP 9) and gets a positive response in return.

Also, if the user 1 has sent a security token to the content provider system CP 9, the latter may send it to the communication network 3, e.g. to the server GUPE 7, for verification by the database DB 6. Retrieval of the information A' from which the user age can be derived may be subjected to matching of the security token sent by the user 1 with the security token stored in the database DB 6 with respect to the user 1 (if any). In this way, the risk that a user can claim to be another user is reduced, since to do so, he/she should know the security token of that other user.

When the information A' has been retrieved and received in a response 17, the server GUPE 7 or the content provider system CP 9 can derive the age A of the user 1 therefrom. In FIG.2, this is done by the server GUPE 7, which then sends the age A to the content provider system CP 9 in the response 18. Alternatively, only the information A' may be included in the forwarded response 18, so that the content provider system CP 9 is the one who derives the age A of the user 1 from A'. In any case, the age A of the user 1 is finally obtained at the content provider system CP 9, e.g. by an age obtaining unit thereof, as a result of the retrieval of A' stored in the database DB 6.

The derivation type depends on the nature of the information A'. If A' already represents the age of the user 1, then the derivation does not imply any transformation of the value A' (as A' is identical to A). In contrast, if A' does not directly represent the age of the user 1, then the derivation involves an appropriate transformation to obtain the age A of the user 1. As an example, if A' is the birth date of the user 1, then A is obtained by comparing A' with a current date.

So, in contrast with the prior art methods where age verification was based only on information provided by the user himself/herself, the present invention takes benefit from the user age related information which has been obtained by the operator of the communication network beforehand within the framework of the user's registration. As a result, the reliability of the age verification can be improved.

No sensitive information, such as a credit card number, is sent online over the communication network 3 during the age verification procedure.

Moreover, the age verification procedure is free for the user, who does not have to purchase anything as a proof of adulthood.

From the content provider's point of view, minimal integration is needed for implementing the age verification procedure according to the invention.

After the content provider system CP 9 has obtained the age A of the user 1, it may selectively provide content to terminal 2 of the user 1 through the communication network 3, depending on the age A obtained.

To do so, the content provider system CP 9 may include a filtering unit F 19 which chooses to provide content or not to users depending on their age. In particular, if the age A of the user 1 obtained at the content provider system CP 9 satisfies the requirements for a given application (e.g. as it is above a certain threshold, in a given range, equal to a certain value, etc.), the filtering unit F 19 may let content C be sent to the terminal 2 of the user 1 over the communication network 3. Also, the filtering unit F 19 may adapt the content delivered to a particular user depending on his/her age. In other words, the filtering unit F 19 may choose whether and/or what content should be provided to a user.

This procedure may be carried out in any of the exemplary situations listed in the introduction, namely children protection, online shops, solvency check, content customization, or any other suitable situation.

Other usage of the user age obtained by a content provider system may also be envisaged within the framework of the present invention.

Note that all or part of the operations described above may be carried out by means of a computer program product comprising appropriate code instructions. In particular, a computer program product may be loaded and run on a content provider system.

## Claims

1. A method for allowing a content provider system (9-11) to verify the age of a user (1) holding a terminal (2) prior to providing content to the user terminal through a communication network (3), the user having registered with an operator of the communication network in order to communicate over said communication network, the registration of said user comprising the storage in a database (6) of the operator of information from which the user age can be derived, the method comprising the following steps carried out by the content provider system, prior to providing content to the user terminal :
- obtaining user identity related information with respect to the user ;
- requesting retrieval of the information from which the user age can be derived, stored in the database of the operator with respect to said user, the request including the obtained user identity related information ; and
- obtaining the age of the user as a result of said retrieval of the information from which the user age can be derived.

2. The method as claimed in claim 1, wherein the database (6) of the operator is associated with a billing server (12) of the operator.

3. The method as claimed in claim 1, wherein the registration of the user (1) with the operator comprises a face-to-face authentication of the user by a retail outlet (5) acting for said operator.

4. The method as claimed in claim 1, wherein a user security token is obtained by the content provider system (9) in addition to said user identity related information, and wherein the request for retrieval of the information from which the user age can be derived further includes the obtained user security token.

5. The method as claimed in claim 4, wherein retrieval of the information from which the user age can be derived is performed selectively on request from the content provider system (9), depending on the value of the user security token included in said request.

6. The method as claimed in claim 1, wherein retrieval of the information from which the user age can be derived is performed selectively, depending on whether the content provider system (9) is authorized by the operator to request said retrieval.

7. The method as claimed in claim 1, wherein the communication network includes a server (7) of the operator, said server being arranged for handling the request from the content provider system (9) for retrieval of the information from which the user age can be derived.

8. The method as claimed in claim 1, further comprising the content provider system selectively (9) providing content to the user terminal (2) through the communication network (3), depending on the age of the user (1) obtained.

9. A content provider system (9-11) arranged for verifying the age of a user (1) holding a terminal (2) prior to providing content to the user terminal through a communication network (3), the user having registered with an operator of the communication network in order to communicate over said communication network, the registration of said user comprising the storage in a database (6) of the operator of information from which the user age can be derived, the content provider system comprising :
- a first reception unit for receiving user identity related information with respect to the user ;
- a transmission unit for transmitting a request for retrieval of the information from which the user age can be derived, stored in the database of the operator with respect to said user, the request including the user identity related information received by the reception unit; and
- an age obtaining unit for obtaining the age of the user as a result of said retrieval of the information from which the user age can be derived.

10. The content provider system (9) as claimed in claim 9, further comprising a content transmission unit for selectively providing content to the user terminal (2) through the communication network (3), depending on the age of the user (1) obtained by the age obtaining unit.

11. A server (7) in a communication network (3) for participating in the verification by a content provider system (9) of the age of a user (1) holding a terminal (2) prior to providing content to the user terminal through the communication network, the user having registered with an operator of the communication network in order to communicate over said communication network, the registration of said user comprising the storage in a database (6) of the operator of information from which the user age can be derived, the server comprising :
- a reception unit for receiving from the content provider system a request for retrieval of the information from which the user age can be derived, stored in the database of the operator with respect to said user, the request including user identity related information ;
- a retrieving unit, responsive to said request being received by the reception unit, for retrieving the information from which the user age can be derived, stored in the database of the operator with respect to said user; and
- a transmission unit for transmitting to the content provider system the information retrieved by the retrieving unit or the age of the user derived from said information.

12. A system comprising a content provider system (9) and a communication network (3), the system being arranged for allowing the content provider system to verify the age of a user (1) holding a terminal (2) prior to providing content to the user terminal through the communication network, according to the method as claimed in any one of claims 1 to 8.

13. A computer program product comprising code instructions for, when loaded and run on a content provider system (9), verifying the age of a user (1) holding a terminal (2) prior to providing content to the user terminal through a communication network (3), the user having registered with an operator of the communication network in order to communicate over said communication network, the registration of said user comprising the storage in a database (6) of the operator of information from which the user age can be derived, the code instructions being arranged for:
- receiving user identity related information with respect to the user;
- transmitting a request for retrieval of the information from which the user age can be derived, stored in the database of the operator with respect to said user, the request including the user identity related information received by the reception unit ; and
- obtaining the age of the user as a result of said retrieval of the information from which the user age can be derived.
